# EUROPEAN PATENT APPLICATION

(11) **EP 1 498 671 A1**
(43) Date of publication of application: **19.01.2005**
(21) Application number: 04016144.0
(22) Date of filing: 08.07.2004
(51) Int. Cl.: F25B 41/00, F25B 49/02, F04B 27/18, F04F 5/48

(54) **Refrigeration cycle**

(30) Priority: 18.07.2003 JP 2003276389
(71) Applicant: TGK Co., Ltd., Hachioji-shi, Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(57) **Abstract**

An ejector equipped refrigeration cycle for an automotive air conditioner, which is reduced in costs and uses an ejector comprises a variable displacement compressor which is driven by the vehicle engine. The compressor capacity is controlled by a capacity control valve 2 until the difference between the discharge pressure Pd and the suction pressure Ps is determined by an external signal, e.g. for the valve 2. The control of the compressor differential pressure also controls the ejector differential pressure. A differential pressure valve 9 between a gas-liquid separator 7 and an evaporator 10 is set to a value proportional to the ejector differential pressure. The value is determined from the external signal.

## Description

The invention relates to an ejector equipped refrigeration cycle according to the preamble of claim 1, particularly to a refrigeration cycle applied to an automotive air conditioner.

Conventionally, ejector equipped refrigeration cycles are used in refrigerating apparatuses, such as water heaters, refrigerator vehicles, and automotive air conditioners, and comprise a compressor, a condenser, an ejector, and a gas-liquid separator. A gas outlet of the separator is connected to the compressor, while a liquid outlet of the separator is connected via an evaporator to the ejector.

The ejector comprises a nozzle having an ejection hole in a forward end, a hollow cylindrical mixing portion between the outer periphery of the nozzle and the downstream side of the ejection hole, and a tapering diffuser. The nozzle decompresses high-temperature, high-pressure liquid refrigerant condensed by the condenser to a pressure level not higher than an evaporation pressure, ejects the refrigerant as a low-pressure jet stream, and draws gaseous refrigerant from the evaporator by a differential pressure generated by the decompression. In the mixing portion, gaseous refrigerant drawn from the evaporator and the jet stream are mixed with each other. In the diffuser, the mixed refrigerant flowing speed is reduced to raise the pressure. Due to the pressure rise the suction pressure of the compressor is increased, to reduce the power which the compressor needs to compress the refrigerant to a predetermined pressure.

A stable flow of refrigerant is required in the ejector refrigeration cycle, so that in water heaters, refrigerator vehicles, and automotive air conditioners, a compressor is used which is driven by an electric motor (JP-A-2002-22295), or by a sub-engine provided separately from the engine driving an automotive vehicle (JP-A-2000-283577). The refrigerating power then is controlled by controlling the rotational speed of the electric motor or the sub-engine, respectively.

When the engine driving the automotive vehicle has to directly drive the compressor, the engine speed largely depends on the operating conditions of the vehicle and causes fluctuations of the capacity of the compressor, which makes it difficult to control the ejector cycle. Therefore, an electric motor or a sub-engine as mentioned, is needed for driving the compressor. Further, the ejector equipped refrigeration cycle comprises a large number of control valves and complicated piping, which increase the cost of the automotive air conditioner.

It is an object of the invention to provide a fair cost ejector equipped refrigeration cycle particularly for an automotive air conditioner.

The above object is achieved by the features of claim 1.

The variable displacement compressor allows to use the engine driving the automotive vehicle also as the drive source of the compressor. The variable displacement compressor stably maintains a predetermined capacity irrespective of variations of the rotational speed of the engine that drives the vehicle and the compressor.

The variable displacement compressor ought to have a capacity control valve that controls the differential pressure between a discharge pressure and a suction pressure to a predetermined value which is determined by an external signal.

The discharge pressure of the compressor is approximately equal to the pressure in the inlet of the ejector. The suction pressure of the compressor is approximately equal to the pressure in an outlet of the ejector. Therefore, the capacity control valve also is able to control the differential pressure across the ejector. This makes it easy to control the ejector cycle.

Driving the compressor by the engine driving the automotive vehicle advantageously reduces the cost of the automotive air conditioner.

Embodiments of the invention will be described with reference to the drawings. In the drawings is:
- Fig.1: a system diagram showing a refrigeration cycle,
- Fig. 2: a Mollier chart for explaining the operation of the refrigeration cycle,
- Fig. 3: a diagram showing characteristics of a differential pressure valve,
- Fig. 4: a longitudinal cross-section of a solenoid-driven differential pressure valve,
- Fig. 5: a cross-section of a first control valve in a state during normal operation,
- Fig. 6: a cross-section of the first control valve in a state during forcibly circulating operation,
- Fig. 7: a cross-section of a second control valve in a state during normal operation,
- Fig. 8: a cross-section of the second control valve in a state during forcibly circulating operation,
- Fig. 9: a cross-section of a third control valve in a state during normal operation,
- Fig. 10: a cross-section of a device comprised of switching valves and an ejector integrally formed with each other in a state during normal operation,
- Fig. 11: a cross-section view showing an example of the construction of the device of Fig. 10 in a state during forcibly circulating operation,
- Fig. 12: a cross-section of a device in which switching valves, an ejector, a check valve, and a differential pressure valve are integrally formed with each other, in a state during normal operation,
- Fig. 13: a cross-section of the device of Fig. 12 in a state during forcibly circulating operation, and
- Fig. 14: a system diagram of a refrigeration cycle in which switching valves, an ejector, a check valve, a differential pressure valve, and a gas-liquid separator are integrally formed with each other.

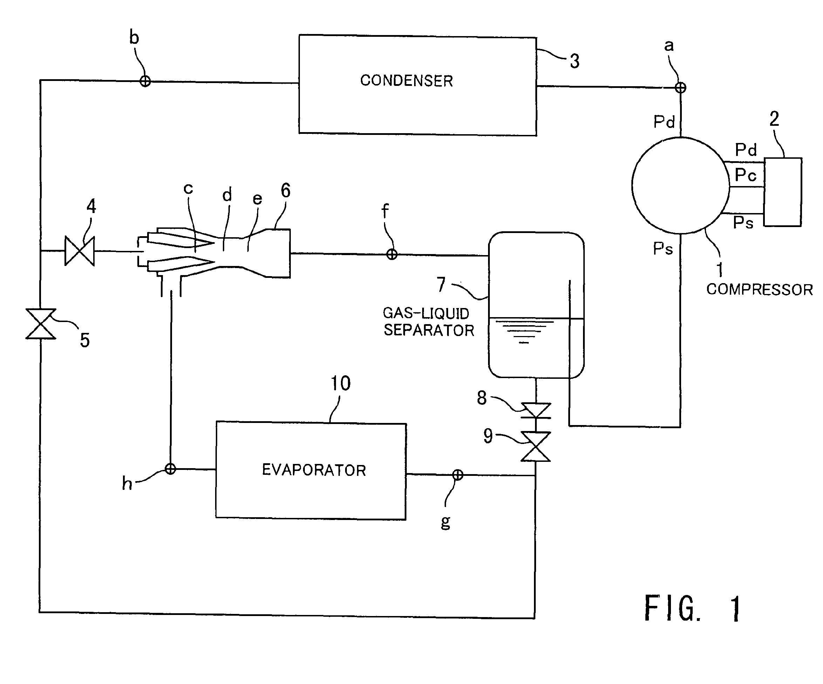

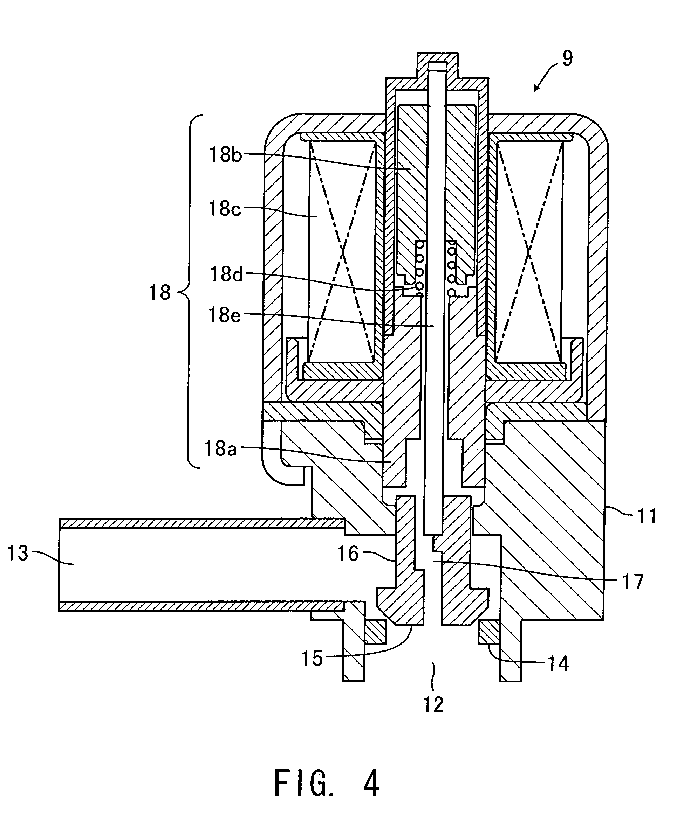

A refrigeration cycle in Fig. 1 includes a swash plate variable displacement compressor 1 which is driven by the not shown engine which also drives an automotive vehicle. The compressor 1 controls the discharging capacity to be constant, irrespective of the rotational speed of the engine. The compressor 1 incorporates an electronically controllable solenoid-driven capacity control valve 2 of a so-called differential pressure control type, and which performs capacity control such that the differential pressure between the discharge pressure Pd and suction pressure Ps of the compressor 1 is held at a predetermined pressure determined by an external signal supplied to the solenoid. Responsive to the discharge pressure Pd and suction pressure Ps of the compressor 1, the capacity control valve 2 controls the flow rate at the discharge pressure Pd which is discharged from the compressor 1 and is supplied to a not shown crankcase of the compressor, for controlling the pressure Pc in the crankcase such that the discharging capacity of the refrigerant is held constant. The capacity control valve 2, for example, may be a solenoid control valve as shown in Fig. 4 of JP-A-2001-132650.

The compressor 1 is connected to a condenser 3 that condenses compressed high-temperature, high-pressure refrigerant by heat exchange with the outside air. To the outlet side of the condenser 3, there are connected two switching valves 4 and 5 for switching between two flow paths. The switching valves 4 and 5 can be implemented by solenoid-driven electromagnetic valves that are electronically controllable, or by an electromagnetic three-way valve instead. Or the switching valves 4 and 5 can be implemented by a three-way valve that switches mechanically or hydraulically by using a differential pressure across an ejector 6. The switching valve 4 is connected to an inlet of the ejector 6 that decompresses and expands refrigerant coming from the condenser 3. An outlet of the ejector 6 is connected to a gas-liquid separator 7 that separates refrigerant into gas and liquid. A gaseous refrigerant outlet of the gas-liquid separator 7 is connected to a refrigerant suction inlet of the compressor 1. A liquid refrigerant outlet of the gas-liquid separator 7 is connected to a check valve 8. The check valve 8 is connected in series to a differential pressure valve 9 whose outlet is connected to an outlet of the switching valve 5 and to an inlet of an evaporator 10. The evaporator 10 evaporates liquid refrigerant by heat exchange with air to be blown into a vehicle compartment, thereby cooling the air. A refrigerant outlet of the evaporator 10 is connected to a suction inlet of the ejector 6.

The ejector 6 converts the pressure energy of high-pressure refrigerant coming from the condenser 3 by a nozzle to speed energy, decompresses and expands the refrigerant, draws gaseous refrigerant formed by evaporation in the evaporator 10 by a negative pressure generated by a jet stream of refrigerant ejected from the nozzle, mixes the drawn gaseous refrigerant and the jet stream ejected from the nozzle with each other at a mixing portion, and converts the speed energy of the mixed refrigerant to pressure energy by a diffuser to again increase the pressure.

The differential pressure valve 9 can be implemented e.g. by an electronically controllable solenoid-driven control valve which may have a characteristic such that when the value of a current supplied to the solenoid is equal to 0, the differential pressure valve 9 is held fully open (the differential pressure between the inlet pressure and the outlet pressure is approximately equal to 0), As the value of the current increases, the refrigerant passage in the valve is narrowed to increase the differential pressure.

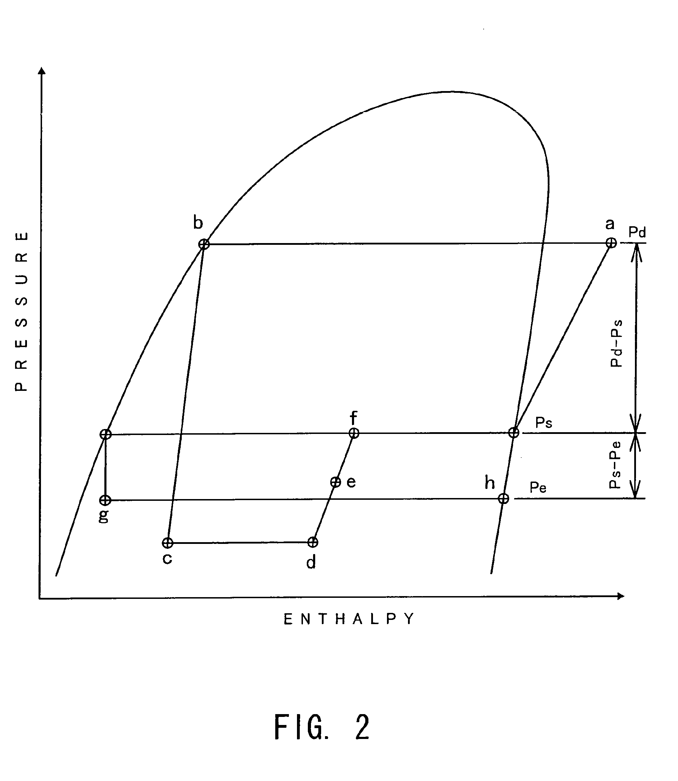

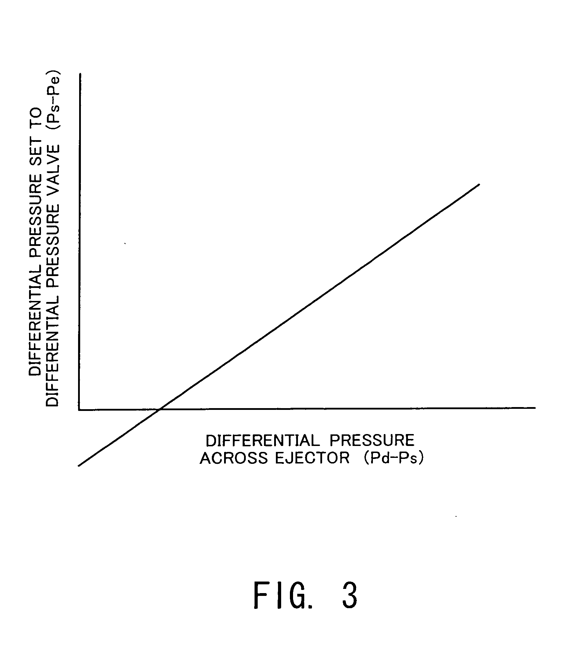

In the Mollier chart in Fig. 2 the horizontal axis represents the enthalpy and the vertical axis represents pressure. Respective states of the refrigerant at respective locations a to h in the refrigeration cycle in Fig. 1 are indicated by the symbols a to h in the Mollier chart as well. In Fig. 3, the horizontal axis represents the differential pressure across the ejector 6, and the vertical axis represents the differential pressure set to the differential pressure valve 9.

First, when the automotive air conditioner is started, the switching valve 4 is fully open and the switching valve 5 is fully closed. The driven compressor 1 draws and compresses gaseous refrigerant from the gas-liquid separator 7, and discharges the compressed refrigerant to the condenser 3. The capacity of the compressor 1 then is controlled by the capacity control valve 2 such that the differential pressure (Pd - Ps) becomes equal to a predetermined differential pressure set by a control signal from a control system, not shown, e.g. the control signal supplied to the capacity control valve 2.

The refrigerant condensed by the condenser 3 enters the ejector 6 via the switching valve 4, and is decompressed and expanded at the nozzle of the ejector 6 so as to draw refrigerant from the evaporator 10. The sucked refrigerant is mixed with the refrigerant ejected from the nozzle. The dynamic pressure of the mixed refrigerant is converted to a static pressure by the diffuser, and the mixed refrigerant enters the gas-liquid separator 7. To the evaporator 10 from which refrigerant is drawn by the ejector 6, liquid refrigerant is caused to flow in from the gas-liquid separator 7 via the check valve 8 and the differential pressure valve 9. The liquid refrigerant exchanges heat with air to be blown into the vehicle compartment, and is evaporated by absorbing heat from the air.

The solenoid-driven differential pressure valve 9 then is controlled by the control system, not shown, such that the set differential pressure is changed in dependence on the power of the ejector 6 for drawing refrigerant from the evaporator 10. The power of drawing refrigerant depends on the differential pressure between the inlet an the outlet of the nozzle of the ejector 6. The pressure (point b) in the inlet is approximately equal to the discharge pressure Pd of the compressor 1, if pressure losses in the condenser 3 and the piping are ignored. Further, the pressure (point f) in the outlet is approximately equal to the suction pressure Ps of the compressor 1. Therefore, the differential pressure across the ejector 6 is approximately equal to the differential pressure (Pd - Ps). The differential pressure (Pd - Ps) is also a target value of control of the capacity control valve 2 that controls the capacity of the compressor 1, and therefore the control system, not shown, accurately recognizes the differential pressure (Pd - Ps) across the compressor 1 from the control signal delivered to the capacity control valve 2, and hence can estimate the differential pressure across the ejector 6 based on the differential pressure (Pd - Ps). In short, the control system is capable of directly estimating the power of the ejector 6 for drawing refrigerant from the evaporator 10, and therefore, as shown in FIG. 3, controls the differential pressure valve 9 such that the valve is set to a differential pressure approximately proportional to the differential pressure across the ejector 6. As a result, assuming that the pressure in a passage from the outlet (point f) of the ejector 6 to the inlet of the compressor 1 is approximately equal to the suction pressure Ps, and that an evaporation pressure within the evaporator 10 (point g to point h) is represented by a pressure Pe, the differential pressure valve 9 is set to the differential pressure (Ps - Pe). When the differential pressure across the ejector 6 increases, the differential pressure valve 9 is set to a larger differential pressure, whereby the refrigerant flowing from the gas-liquid separator 7 to the evaporator 10 is decompressed and expanded by the differential pressure valve 9 to an extent corresponding to the differential pressure set to the differential pressure valve 9. This causes the refrigerant to enter the evaporator 10 in a lower temperature condition which increases the refrigerating power of the refrigeration cycle.

Inversely, to lower the refrigerating power of the refrigeration cycle, the capacity of the compressor 1 is controlled by the capacity control valve 2 such that the differential pressure across the compressor 1 is decreased. This also decreases the differential pressure across the ejector 6, and also reduces the power of the ejector 6 for drawing refrigerant from the evaporator 10. The amount of refrigerant drawn from the evaporator 10 into the ejector 6 becomes smaller, so that refrigerant supplied from the gas-liquid separator 7 is not fully evaporated, but part thereof is left unevaporated in the evaporator 10 to stay therein as liquid refrigerant. When the refrigeration cycle continues to be operated in such a state, the flow rate of the refrigerant flowing through the compressor 1 is reduced, whereby lubricant oil for the compressor 1, contained the refrigerant, becomes short. This can cause seizure of the compressor 1.

To solve the above problem, the control system controls the switching valves 4 and 5 such that when the differential pressure set to the capacity control valve 2 has been made lower than a predetermined value, i.e. when the differential pressure across the ejector 6 has become smaller than 0.3 MPa, the switching valve 4 and the switching valve 5 are switched to a fully-closed state and a fully-open state, respectively, to cause refrigerant from the condenser 3 to forcibly flow into the evaporator 10. As a result, refrigerant discharged from the compressor 1 flows along a loop and returns to the compressor 1 via the condenser 3, the switching valve 5, the evaporator 10, the ejector 6, and the gas-liquid separator 7. This prevents the compressor 1 from becoming short of lubricant oil, and further causes the liquid refrigerant remaining in the evaporator 10 as well to be forcibly circulated together. At this time, when the refrigerant flows from the switching valve 5 to the evaporator 10, the check valve 8 is closed by the pressure of the flowing refrigerant. This prevents that the refrigerant bypasses the evaporator 10 and the ejector 6 and flows into the gas-liquid separator 7.

The differential pressure valve 9 in Fig. 4 has body 11 with an inlet 12 connected to the gas-liquid separator 7, and with an outlet 13 connected to the evaporator 10. The inlet 12 has a valve seat 14. A valve element 15 is disposed opposed to the valve seat 14 on the downstream side, such that the valve element 15 can move to and away from the valve seat 14. The valve element 15 is integrally formed with a piston 16 having a diameter smaller than the inner diameter of the valve seat 14. An axial passage 17 is formed through the valve element 15 and the piston 16, such that the pressure received from the gas-liquid separator 7 by the valve element 15 is also received by the piston 16 from the opposite direction.

On an upper portion of the body 11 a solenoid 18 is provided. The solenoid 18 comprises a core 18a, a plunger 18b, a coil 18c, a spring 18d, and a shaft 18e. The core 18a is rigidly fixed to the body 11. The plunger 18b is urged by the spring 18d in a direction away from the core 18a. The plunger 18b is time fixed to one end of the shaft 18e while extends through the core 18a. The piston 16 is fitted on the other end of the shaft 18e.

When no current is supplied to the coil 18c the plunger 18b is urged by the spring 18d in the direction away from the core 18a to pull the shaft 18e upward. The valve element 15 is moved away from the valve seat 14. The differential pressure valve 9 is in the fully-open state.

When current is supplied to the coil 18c, the plunger 18b is attracted to the core 18a against the urging force of the spring 18d. The shaft 18e pushes the piston 16 downward. The valve element 15 moves toward the valve seat 14, to narrow the cross-sectional area of a refrigerant passage formed between the inlet 12 and the outlet 13. This action creates a differential pressure across the differential pressure valve 9 the value of which is set according to the value of current supplied to the coil 18c. The current value is controlled to a value corresponding to a differential pressure approximately proportional to the differential pressure across the ejector 6 estimated from the control signal delivered to the capacity control valve 2 of the compressor 1.

By maximizing the value of the current supplied to the coil 18c, it is possible to seat the valve element 15 on the valve seat 14. Therefore, when the differential pressure across the ejector 6 becomes lower than the predetermined value, the refrigerant passage can be fully closed by maximizing the value of the current supplied to the coil 18c. Then the differential pressure valve 9 functions as the check valve 8.

In the following, a valve will be described which is mechanically pressure controlled, namely a control valve which has a check valve 8 and a differential pressure valve 9 integrally formed with each other.

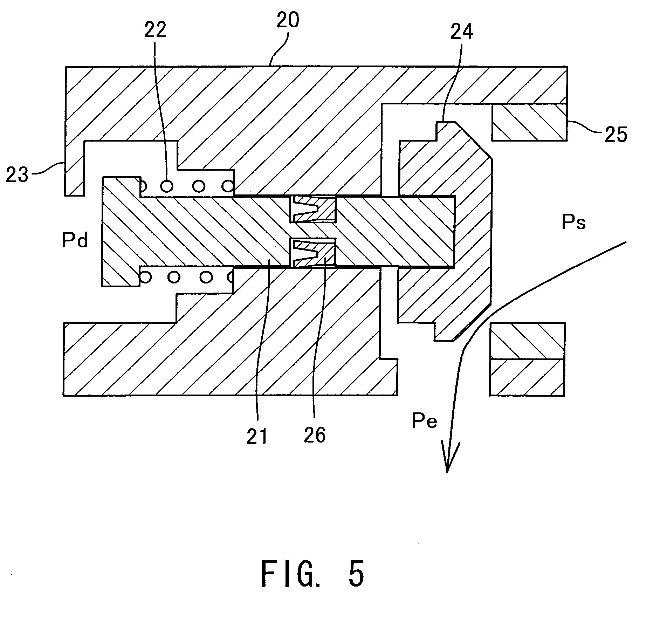

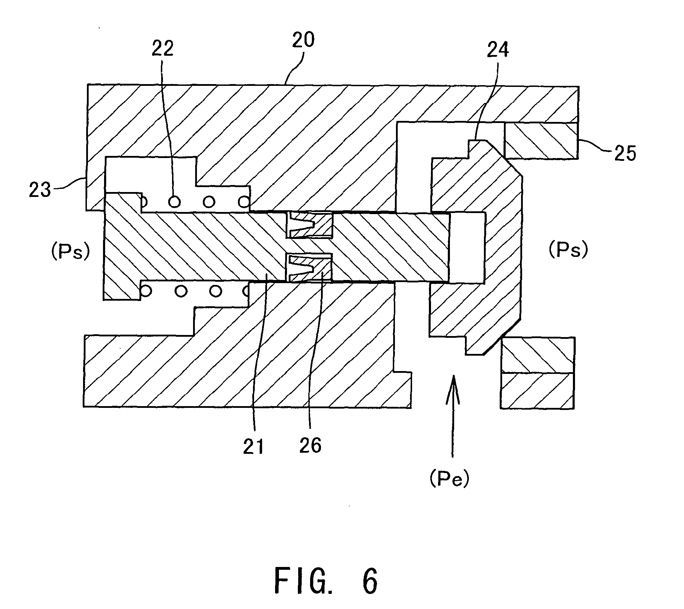

The control valve in Figs 5 and 6 includes a piston 21 slidably extending through a body 20. The piston 21 is urged by a spring 22 in the direction towards abutment with a stopper 23 of the body 20. A space accommodating the spring 22 communicates with piping connected to the inlet of the ejector 6.

During normal operation (the differential pressure across the ejector 6 is not lower than the predetermined value) pressure Pd substantially equal to the discharge pressure Pd of the compressor 1 is introduced. The piston 21 carries an axially movable a valve element 24 on the opposite side of the spring 22. A space accommodating the valve element 24 communicates with piping connected to the evaporator 10, so that the pressure Pc within this space is substantially equal to the pressure Pe within the evaporator 10. Opposed to the valve element 24 a valve seat-forming member 25 is fitted into an opening of the body 20. A valve hole of the valve seat-forming member 25 is connected to the liquid outlet of the gas-liquid separator 7. The pressure Ps in the valve hole is substantially equal to the suction pressure Ps of the compressor 1. A V-packing 36 on the piston 21 prevents internal leakage between the inlet of the ejector 6 and the evaporator 10.

During normal operation (Fig. 5; the differential pressure across the ejector 6 is not lower than the predetermined value) the piston 21 receives the discharge pressure Pd at one end and the pressure Pe at the other end. The valve element 24 receives the pressure Pe at one side and the suction pressure Ps at the other side. The differential pressure (Pd - Ps) across the ejector 6 determines the axial position of the piston 21 and the lift amount of the valve element 24 which is pressed against the piston 21 by the suction pressure Ps which is higher than the pressure Pe from the evaporator 10, whereby the differential pressure (Ps - Pe) of the refrigerant flowing from the gas-liquid separator 7 to the evaporator 10 is set.

As the differential pressure (Pd - Ps) across the ejector 6 increases, the lift amount of the valve element 24 decreases and the differential pressure (Ps - Pe) increases, in a manner substantially proportional to the increase in the differential pressure (Pd - Ps). Inversely, as the differential pressure (Pd - Ps) across the ejector 6 decreases, the lift amount of the valve element 24 increases and the differential pressure (Ps - Pe) decreases, in a manner substantially proportional to the decrease in the differential pressure (Pd - Ps). At this time, the valve element 24 serves as the differential pressure valve 9 in the Fig. 1 system in which the differential pressure (Ps - Pe) is controlled substantially proportionally to the differential pressure (Pd - Ps) across the ejector 6, as shown in Fig. 3.

As shown in Fig. 6, during a forcibly circulating operation in which the differential pressure across the ejector 6 is lower than the predetermined value, the switching valve 4 connected to the inlet of the injector 6 is fully-closed. Refrigerant from the condenser 3 is introduced via the switching valve 5 into the evaporator 10. The piston 21 receives pressure close to the suction pressure Ps at the one end and the pressure reduced by the switching valve 5 to a value close to the pressure Pe at the other end. At this time, the pressure Pe is larger than the suction pressure Ps, so that the piston 21 abuts at the stopper 23 by the differential pressure (Ps - PC) and the urging force of the spring 22, while the valve element 24 is seated by the piston 21 on the valve seat-forming member 25. The liquid refrigerant outlet of the gas-liquid separator 7 is closed. In short, at this time, the valve element 24 serves as the check valve 8 in the Fig. 1 system.

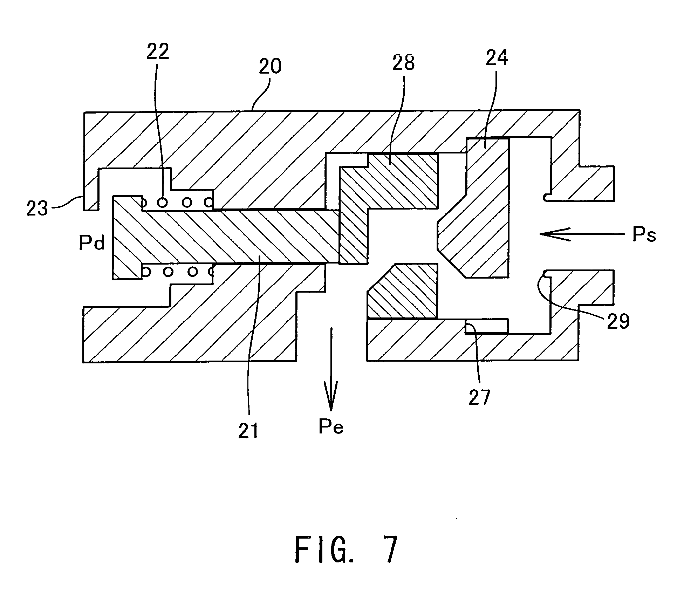

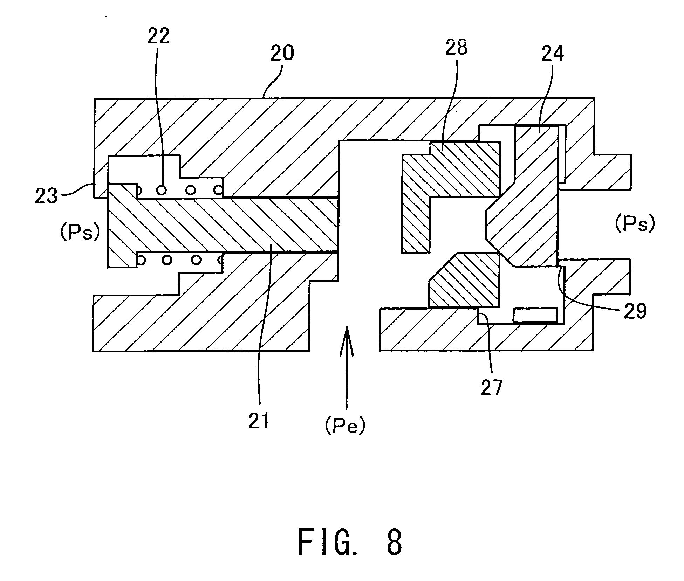

The second control valve in Figs 7 and 8 includes the piston 21, and the spring 22 acting towards the stopper 23 formed in the body 20. The space accommodating the spring 22 communicates with the inlet of the ejector 6 to introduce pressure substantially equal to the discharge pressure Pd. The body 20 has an opening on a side opposite to the stopper 23. The opening communicates with the liquid refrigerant outlet of the gas-liquid separator 7 to receive pressure substantially equal to the suction pressure Ps of the compressor 1. A hole in a central portion communicates with the evaporator 10 to adapt the pressure in the hole substantially to the pressure Pe. Two cylinders having different diameters are coaxially formed between the opening and the hole. The cylinder on the side where the piston 21 protrudes has a smaller diameter to form a stepped portion 27 at a boundary between the two cylinders. The large-diameter cylinder contains the axially movable valve element 24. The small-diameter cylinder contains an axially movable valve seat 28, which cooperates with the valve element 24 to form the differential pressure valve 9 in the Fig. 1 system. The movable valve seat 28 has a valve hole communicating with a plurality of passages formed in the valve seat 28 such that they open at locations shifted from a location where the movable valve seat 28 is brought into abutment with the piston 21. On the other hand, the valve element 24 has a plurality of through holes axially extending through the cylinder, which are formed in a circumferential arrangement at locations close to a sliding surface of the valve element 24 in the cylinder. Further, the body 20 has an annular valve seat 29 formed on the opening communicating with the gas-liquid separator 7, opposed to the valve element 24. The annular valve seat 29 cooperates with the valve element 24 to form the check valve 8 in the Fig. 1 system.

As shown in Fig. 7, during normal operation in which the differential pressure across the ejector 6 is not lower than the predetermined value, the piston 21 receives the discharge pressure Pd at one end and the pressure Pe at the other end. The movable valve seat 28 is brought into abutment with the piston 21. The valve element 24 is pushed by the suction pressure Ps from the gas-liquid separator 7 into abutment with the stepped portion 27. Therefore, in the control valve, the differential pressure (Pd - Ps) across the ejector 6 determines the axial position of the piston 21, and the lift amount of the valve element 24, which corresponds to a separation distance between the valve element 24 remaining unmoved and the movable valve seat 28, whereby the differential pressure (Ps - Pe) of the liquid refrigerant flowing from the gas-liquid separator 7 to the evaporator 10 is set.

As the differential pressure (Pd - Ps) across the ejector 6 increases, the lift amount of the valve element 24 decreases, and the differential pressure (Ps - Pe) increases, substantially proportional to the increase in the differential pressure (Pd - Ps). Inversely, when the differential pressure (Pd - Ps) across the ejector 6 decreases, the lift amount of the valve element 24 increases, and the differential pressure (Ps - Pe) decreases, substantially proportional to the decrease in the differential pressure (Pd - Ps). Therefore, at this time, the valve element 24 is controlled such that the differential pressure (Ps - Pe) is controlled substantially proportionally to the differential pressure (Pd - Ps) across the ejector 6, as shown in Fig. 3.

As shown in Fig. 8, during forcibly circulating operation in which the differential pressure across the ejector 6 is lower than the predetermined value, the piston 21 receives pressure close to the suction pressure Ps at one side, and pressure reduced by the switching valve 5 to a value close to the pressure Pe at the other side. The piston 21 abuts at the stopper 23 by the differential pressure (Ps - Pe), and the force of the spring 22. The valve element 24 is seated on the movable valve seat 28 due to movement of the movable valve seat 28 pushed by the pressure close to the pressure Pe within the evaporator 10, and at the same time is also seated on the valve seat 29 by the pressure close to the pressure Pe within the evaporator 10. The liquid refrigerant outlet of the gas-liquid separator 7 is closed.

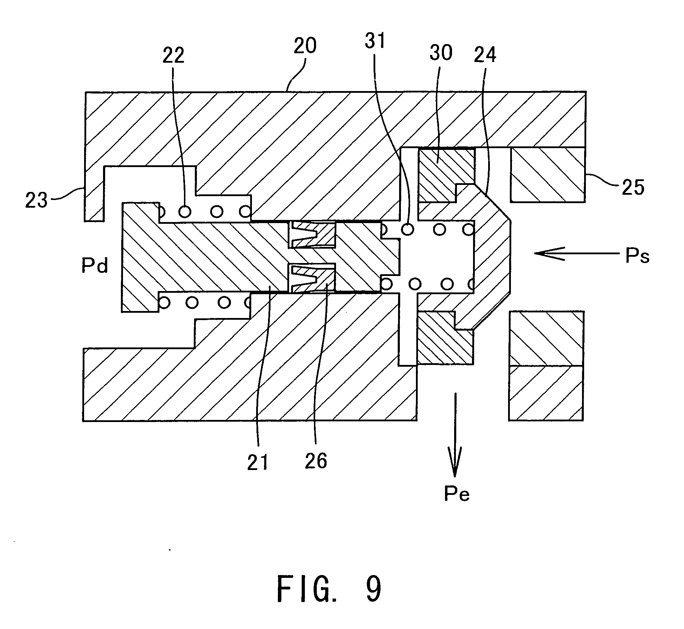

The third control valve of Fig. 9 includes a guide 30 for axially movably holding the valve element 24. A spring 31 is disposed between the piston 21 and the valve element 24. The difference between the pressure-receiving area of the valve element 24 and the high pressure-receiving area of the piston 21 is smaller than in Fig. 5.

The effective pressure-receiving area of the valve element 24 in Fig. 9 is smaller than required for the balancing pressure (Pd) and the pressure (Ps). The shortage of the pressure (Ps) is compensated for by the spring 31. This results in a size reduction of the valve element 24 and improves the seating performance of the valve element 24 on the valve seat-forming member 25.

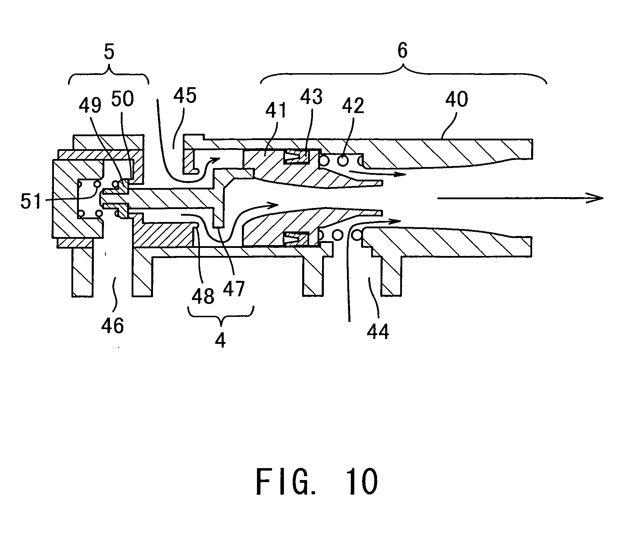

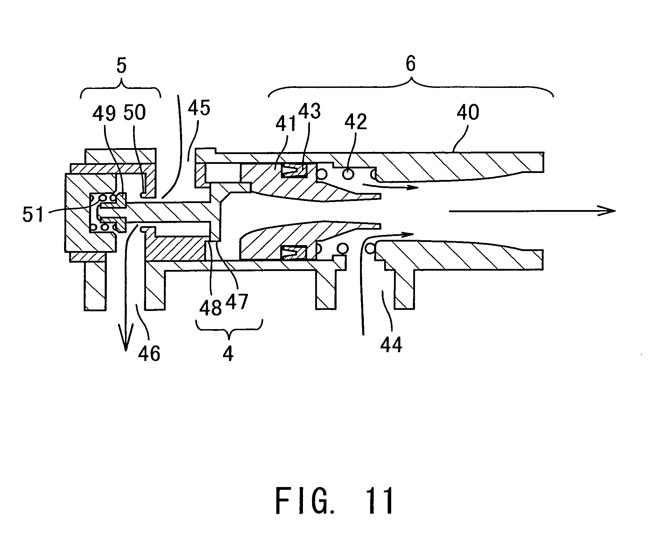

Next, a description of Figs 10, 11 will be given of a device for mechanically operating the switching valves 4 and 5 by the differential pressure across the ejector 6.

The ejector 6 comprises in Figs 10, 11 a body 40 in which the interior of the refrigerant outlet side is configured as a diffuser. A nozzle 41 is axially movably disposed within the body 40. A spring 42 urges the nozzle 41 to the inlet side. A V-packing 43 on the nozzle 41 prevents internal leakage from the inlet of the ejector 6 to a mixing portion. The body 40 includes an inlet 44 for introducing gaseous refrigerant evaporated by the evaporator 10 into an outer periphery of the nozzle 41 inward of a forward end thereof. An inlet 45 introduces liquid refrigerant from the condenser 3. An outlet 46 leads the liquid refrigerant introduced into the refrigerant inlet 45 during a forcibly circulating operation, to the evaporator 10.

Between the inlet 45 and the nozzle 41, a valve element 47 having a large pressure-receiving area, and a valve seat 48 are provided for both forming the switching valve 4 in Fig. 1. The valve element 47 is connected to the nozzle 41 e.g. by three integrally fixed leg portions. Between the inlet 45 and the outlet 46 a valve element 49 having a small pressure-receiving area and a valve seat 50 are provided both forming the switching valve 5 in Fig. 1. The valve element 47 and the valve element 49 are connected to each other by a shaft extending through respective associated valve holes. The valve element 47, the valve element 49, and the nozzle 41 are urged by a spring 51 toward the outlet of the ejector 6. When one of the switching valves 4 and 5 is open, the other is closed. The switching valves 4 and 5 form a three-way valve. The switching valves 4 and 5 are mechanically or hydraulically switched to form the control valve at reduced cost.

As shown in Fig. 10, during normal operation in which the differential pressure across the ejector 6 is not lower than a predetermined value, high-pressure liquid refrigerant introduced from the condenser 3 into the inlet 45 pushes open the switching valve 4 having a larger pressure-receiving area. Refrigerant enters a space between the switching valve 4 and the nozzle 41. The nozzle 41 having the still larger pressure-receiving area is moved against the force of the spring 42 into abutment with a stopper formed by a stepped portion. When the switching valve 5 is closed by the movement of the nozzle 41, all the liquid refrigerant introduced into the inlet 45 flows through the nozzle 41. At this time, gaseous refrigerant evaporated by the evaporator 10 is drawn from the inlet 44, is mixed with a jet stream exiting from the nozzle 41, is then reduced in flow speed by the diffuser such that the pressure is raised, and is caused to flow from the outlet to the gas-liquid separator 7.

As shown in Fig. 11, during forcibly circulating operation in which the differential pressure across the ejector 6 is lower than the predetermined value, the force of the spring 42 overcomes the pressure of the liquid refrigerant introduced into the inlet 45. The nozzle 41 is pushed toward the switching valve 4. The valve element 49 moves in unison with the nozzle 41 away from the valve seat 50 to open the switching valve 5. The valve element 47 is seated on the valve seat 48 to close the switching valve 4. As a result, the liquid refrigerant introduced from the condenser 3 into the inlet 45 flows via the switching valve 5 to the evaporator 10.

The three-way valve structure as described may be configured to perform switching by a snap action to achieve a short switching time, or alternatively by a slow switching action which takes a long switching time, causing the switching valves 4 and 5 to open simultaneously.

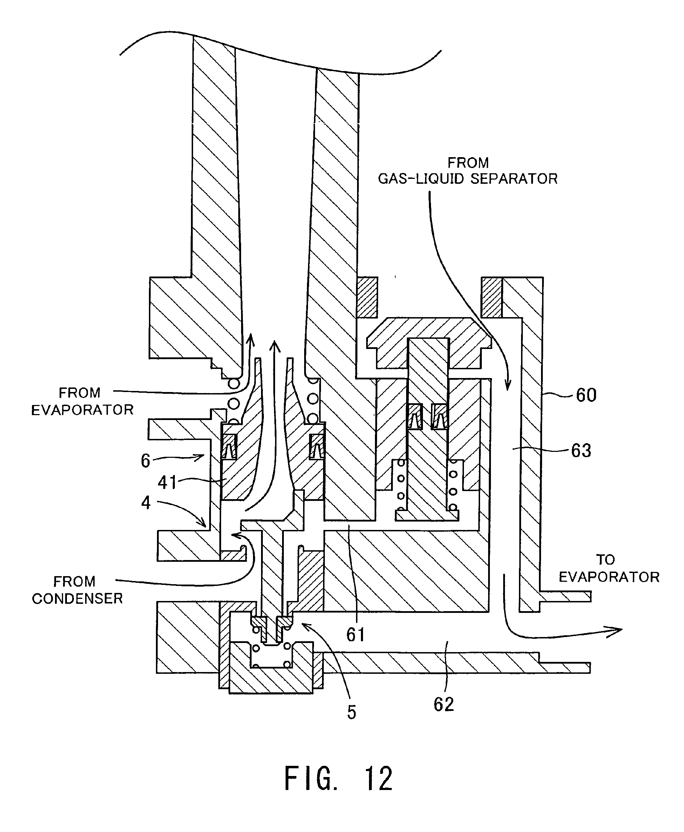

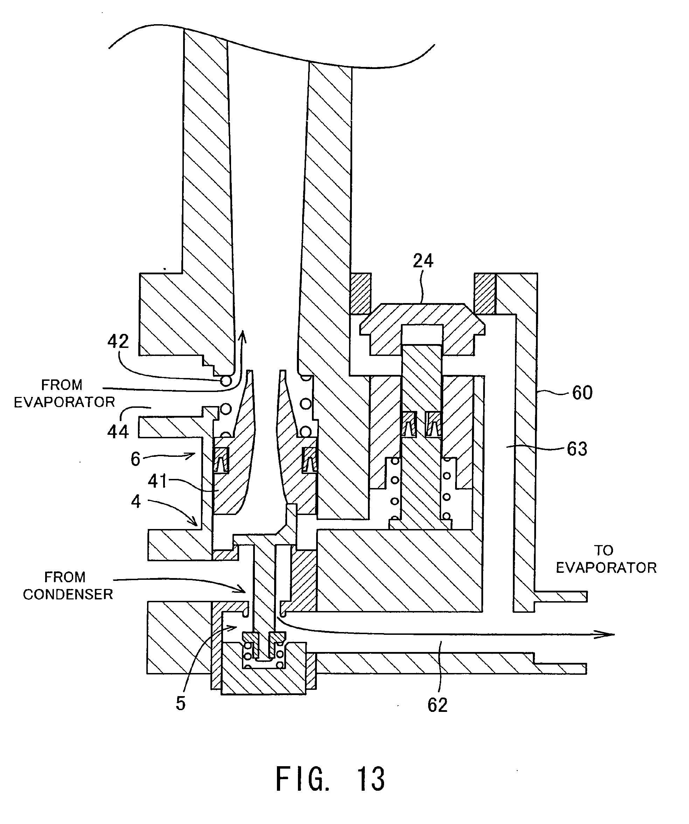

Next, an example of a device (Figs 12, 13) in which the switching valves 4 and 5, the ejector 6, the check valve 8, and the differential pressure valve 9 are integrally formed with each other will be described.

The switching valves 4 and 5, the ejector 6, and a control valve comprised of the check valve 8 and the differential pressure valve 9 are accommodated in a common body 60 in Figs 12, 13. A space between the switching valve 4 and the nozzle 41 is connected to the control valve by a passage 61 formed within the body 60, whereby the pressure in the inlet of the ejector 6 is introduced to the control valve. A passage 62 on a downstream side of the switching valve 5 and a passage 63 on a downstream side of the control valve are caused to join into one passage within the body 60 to be connected to the evaporator 10.

The individual components here are arranged in a concentrated manner, so that the device is compact in size but also excellent in assemblability due to the elimination of the necessity of connecting individual components by pipes or tubes, one by one. The possibility of refrigerant leakage through joint parts is minimized due to a largely reduced number of parts.

As shown in Fig. 12, during normal operation in which the differential pressure across the ejector 6 is not lower than the predetermined value, the switching valve 4 is opened by liquid refrigerant introduced from the condenser 3, while the switching valve 5 is closed. The introduced liquid refrigerant flows through the nozzle 41, is decompressed and expanded and is ejected by the front end of the nozzle 41. Gaseous refrigerant evaporated by the evaporator 10 is drawn in, is mixed with a jet stream from the nozzle 41, the mixture flow speed is decelerated by the diffuser to be pressurized or raised in pressure, and is then caused to flow from the outlet to the gas-liquid separator 7. Into the evaporator 10 from which the gaseous refrigerant is drawn in by the ejector 6, liquid refrigerant is introduced for evaporation, via the control valve with a valve lift dependent on the differential pressure across the ejector 6, and the resulting gaseous refrigerant is sent to the ejector 6.

As shown in Fig. 13, during forcibly circulating operation in which the differential pressure across the ejector 6 is lower than the predetermined value, the switching valve 4 is closed and the switching valve 5 is opened, by the urging force of the spring 42. Liquid refrigerant from the condenser 3 flows to the evaporator 10 via the switching valve 5. The valve element 24 of the control valve is closed by the pressure of the liquid refrigerant. The refrigerant which flowed through the evaporator 10 enters the ejector 6 at the inlet 44.

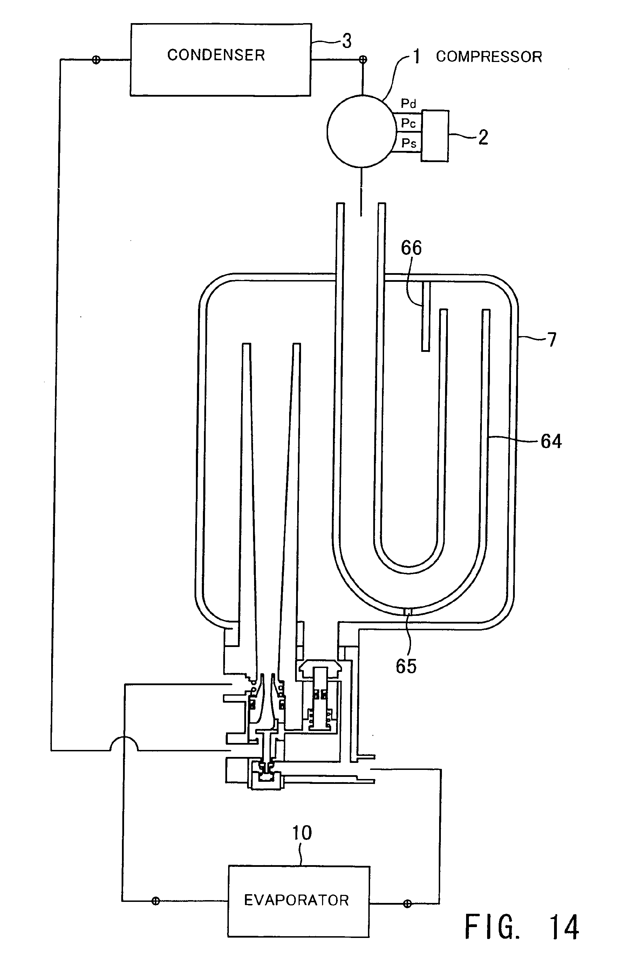

The system diagram of Fig. 14 shows an example of a refrigeration cycle in which switching valves, an ejector, a check valve, a differential pressure valve, and a gas-liquid separator are integrally formed with each other.

The one-piece structure shown in Fig. 12 is configured in Fig. 14 to further integrate the gas-liquid separator 7. The gas-liquid separator 7 has an integral one-piece part comprised of the switching valves 4 and 5, the ejector 6, and the control valve including the check valve 8 and the differential pressure valve 9, which are disposed at a lower part. The diffuser of the ejector 6 opens in an upper portion of the inside of the gas-liquid separator 7, whereby a one-piece construction is formed. The gas-liquid separator 7 has an inner U-shaped pipe 64. One open end of the pipe 64 is connected to the suction port of the compressor 1. The other open end of pipe 64 is located in an upper portion of the interior of the gas-liquid separator 7, where gaseous refrigerant exists. The lowest portion of the U-shaped pipe 64 is formed with a bleed hole 65. When gaseous refrigerant passes through the U-shaped pipe 64 at high flow speed, the gaseous refrigerant draws up lubricant oil for the compressor 1 collected in the bottom of the gas-liquid separator 7 to supply the lubricant oil to the compressor 1. A baffle plate 66 is disposed around the open end of the U-shaped pipe 64 from which gaseous refrigerant is drawn.

Of component parts which are to be arranged in an engine room, the switching valves 4 and 5, the ejector 6, the control valve including the check valve 8 and the differential pressure valve 9, and the gas-liquid separator 7 are integrally formed with each other. This largely reduces the number of joint parts of piping 1, from which refrigerant can leak, improves the assemblability, and makes the whole system compact in size.

The refrigeration cycle as described for an automotive vehicle can be applied not only to ejector cycles using a CFC's substitute as the refrigerant but also to ejector cycles using any of various kinds of refrigerant, such as carbon dioxide.

## Claims

1. A refrigeration cycle, particularly for an automotive air conditioner, comprising a compressor (1) and an ejector (6) that draws evaporated refrigerant while decompressing cooled or condensed refrigerant,
**characterized in that** the compressor (1) for compressing the refrigerant is a variable displacement compressor.

2. The refrigeration cycle as in claim 1, **characterized in that** the variable displacement compressor comprises a capacity control valve (2) for controlling a differential pressure (Pd - Ps) between a discharge pressure (Pd) and a suction pressure (Ps) to a predetermined differential pressure determined by an external signal, preferably, an external signal generated for the capacity control valve.

3. The refrigeration cycle as in claim 2, **characterized by** a differential pressure valve (9) disposed between a gas-liquid separator (7) and an evaporator (10) such that a differential pressure across the differential pressure valve is controlled approximately proportionally to a differential pressure across the ejector (6).

4. The refrigeration cycle as in claim 3, **characterized in that** the differential pressure valve (9) is a solenoid-driven differential pressure valve to which is set a required differential pressure by a current value determined from the differential pressure across the ejector (6) estimated from the external signal determining the predetermined differential pressure.

5. The refrigeration cycle as in claim 4, **characterized in that** the differential pressure across the solenoid-driven differential pressure valve (9) is set to approximately 0 when the current value is equal to 0.

6. The refrigeration cycle as in claim 3, **characterized by** a check valve (8) connected in series to the differential pressure valve (9), for allowing the refrigerant to flow only in a direction in which the refrigerant flows out from a liquid refrigerant outlet of the gas-liquid separator (7).

7. The refrigeration cycle as in claim 3, **characterized in that** a valve lift of the differential pressure valve (9) is controlled according to the differential pressure across the ejector (6).

8. The refrigeration cycle as in claim 7, **characterized in that** the differential pressure valve (9) comprises a piston (21) that receives pressure from an inlet of the ejector (6) at one end, and a valve (24, 25) that has a valve element (24) provided on another end of the piston (21), the valve lift of the valve element (24) being controlled according to the differential pressure across the ejector (6), due to pressure from the liquid refrigerant outlet of the gas-liquid separator (7), which urges the piston (21) against the pressure from the inlet of the ejector, and at the same time urges the valve element (24) in a direction of opening the valve (24, 25), the pressure corresponding to the pressure in a refrigerant outlet of the ejector (6).

9. The refrigeration cycle as in claim 8, **characterized in that** a spring (31) is interposed between the piston (21) and the valve element (24) in order to reduce a pressure difference due to a difference between an effective pressure receiving area of the piston (21) and an effective pressure receiving area of the valve element (24).

10. The refrigeration cycle as in claim 7, **characterized in that** the differential pressure valve comprises a piston (21) that receives a pressure from a inlet of the ejector (6) at one end, and a valve (24, 28) that has a movable valve seat (28) provided at another end of the piston (21), the valve lift of the valve seat (28) being controlled according to the differential pressure across the ejector (6), due to pressure from the liquid refrigerant outlet of the gas-liquid separator (7), which urges the piston (21) against the pressure from the inlet of the ejector (6), and at the same time urges the movable valve seat (28) in a direction away from a valve element (24), the pressure corresponding to pressure from a refrigerant outlet of the ejector (6).

11. The refrigeration cycle as in claim 3, **characterized by** at least one switching valve (4, 5) for switching between two refrigerant flow paths such that cooled or condensed refrigerant is caused to flow through the ejector (6) when the differential pressure across the ejector (6) is not lower than a predetermined value, whereas when the differential pressure across the ejector (6) is lower than the predetermined value, cooled or condensed refrigerant is caused to flow through a passage between the evaporator (10) and the differential pressure valve (9).

12. The refrigeration cycle as in claim 11, **characterized by** a check valve (8) provided between the differential pressure valve (9) and the gas-liquid separator (7), for allowing the refrigerant to flow only in a direction in which the refrigerant flows out from a liquid refrigerant outlet of the gas-liquid separator (7).

13. The refrigeration cycle as in claim 11, **characterized in that** the switching valve (4, 5) is a solenoid valve that performs switching based on the external signal controlling the differential pressure between the discharge pressure (Pd) and the suction pressure (Ps) of the compressor (1) to the predetermined differential pressure.

14. The refrigeration cycle as in claim 11, **characterized in that** the switching valve (4, 5) is a mechanically-operated three-way valve that performs switching based on a value of the differential pressure across the ejector (6).

15. The refrigeration cycle as in claim 14, **characterized in that** the switching valve (4, 5) is integrally formed with the ejector (9).

16. The refrigeration cycle as in claim 15, **characterized in that** the switching valve (4, 5) is further integrally formed with the differential pressure valve (9).

17. The refrigeration cycle **characterized in that** claim 16, **characterized in that** the switching valve (4, 5) is further integrally formed with the gas-liquid separator (7).

18. A refrigeration cycle of an automotive air conditioner of an engine driven vehicle, the refrigeration cycle comprising a compressor (1), a condenser (3), an ejector (6), a gas-liquid separator (7), an evaporator (10), and a control system for controlling the refrigerating power of the refrigeration cycle, **characterized in that**
the compressor (1) is a variable displacement compressor comprising a capacity control valve (2) for controlling a differential pressure between a discharge pressure (Pd) and a suction pressure (Ps) to a predetermined differential pressure determined by an external signal from the control system to the compressor capacity valve (2),
the compressor (1) is in direct driving connection with the vehicle engine,
the control system is designed to estimate the pressure differential across the ejector (6) from the external signal,
the differential pressure control valve (9) is provided for producing a pressure differential proportional to the pressure differential across the ejector (6) as long as the value of the pressure differential across the ejector (6) is not lower than a predetermined value, and
a switching valve assembly (4, 5) is provided for selectively by-passing the ejector (6) as long as the pressure differential across the ejector (6) is lower than the predetermined value.
